# EUROPEAN PATENT APPLICATION

(11) **EP 3 832 174 A1**
(43) Date of publication of application: **09.06.2021**
(21) Application number: 20209077.5
(22) Date of filing: 20.11.2020
(51) Int. Cl.: F16J 15/00, F16J 15/34

(54) **MECHANICAL SEAL WITH FLUID PROTECTION**

(30) Priority: 03.12.2019 IT 201900022815
(71) Applicant: Meccanotecnica Umbra S.p.A., 06042 Campello Sul Clitunno (IT)
(72) Inventor: VENTURA, ALESSANDRO, 05100 TERNI (IT); FERRI, LUIGI MASSIMILIANO, 06042 CAMPELLO SUL CLITUNNO (PG) (IT); PEDUCCI, ROBERTO, 06124 PERUGIA (IT); BORASSO, MASSIMILIANO, 06059 TODI (PG) (IT)
(74) Representative: Cutropia, Gianluigi

(57) **Abstract**

Mechanical seal (100) comprising a fixed part (1) comprising a first seal ring (10) disposed in a receptacle (11) and a rotating part (4) comprising a second seal ring (20) disposed in a sleeve (9) suitable for being fixed to a rotating shaft (3). The fixed part (1) comprises a box (9) having a central hole (92) suitable for being crossed by the rotating shaft (3); the box (9) being fixed to the receptacle (11) in such a way to form a chamber (93) to collect fluid leaks that pass through the seal rings (10, 20). The mechanical seal (100) also comprises a secondary seal (200) disposed between the rotating shaft (3) and the box to prevent the fluid leaks from passing through the central hole (92) of the box.

## Description

The present invention relates to a mechanical seal suitable for being interposed between a rotating shaft and an opening of a casing through which the shaft is mounted. Such a type of seal is especially suitable for being used in electric motors of electric vehicles provided with coolant system in order to isolate the coolant from the electric parts of the motor and from the bearings that support the rotating shaft of the motor.

As it is known, a mechanical seal comprises:
- a fixed part comprising a first seal ring,
- a rotating part comprising a second seal ring, and
- a spring disposed in the fixed part in such a way to push the first seal ring towards the second seal ring.

In such a way, the mechanical seal separates a fluid chamber, which contains a working fluid, from an air chamber where an electric motor that rotates the rotating shaft is generally disposed.

JP2004068982 discloses an electric motor for an electric vehicle provided with a mechanical seal for isolating the chamber that contains a coolant from a compartment that contains the electric motor.

Such a type of electric motor with traditional mechanical seal is impaired by the possible presence of fluid and/or steam leaks through the seal rings. Said leaks may reach the bearings connected to the shaft as well as the electrical parts of the motor, such as the windings of the stator assembly of the motor. After condensation, said leaks of fluid or steam will generate humidity, thus damaging the bearings with the risk of seizing for the motor, and the stator windings with the risk of short circuit.

Another drawback is represented by the fact that, by rotating at high speeds, the rotating shaft generates eddy currents that negatively affect the operation of the motor and the reliability of the rotating shaft and of the parts connected to the rotating shaft. Such a phenomenon is accentuated if a hollow shaft with coolant circulation is used.

EP0580400 discloses a rotating shaft that is revolvingly mounted in a cylindrical conduit of a fixed structure (motor housing) by means of a bearing. A primary seal comprises a rotating seal ring integrally fixed to the rotating shaft and a fixed seal ring mounted in a box-shaped annular casing that is integrally fixed to the cylindrical conduit of the fixed structure. The fixed seal ring is pushed by a spring towards the rotating seal ring.

Obviously, the cylindrical conduit is obtained in the motor housing, is not a box and is not a part of the mechanical seal.

The steam infiltrations that may pass through the primary seal will flow in an annular conduit between the rotating shaft and the annular receptacle of the fixed ring, will enter the cylindrical conduit of the fixed structure and will condense at liquid state in the cylindrical conduit, with the risk of penetrating into the bearing. For this reason, the bearing must have a suitable seal to prevent the liquid infiltrations in the cylindrical conduit of the receptacle from penetrating into the bearing and the receptacle must be provided with a drain conduit obtained in the fixed structure to drain the condensed liquid in the cylindrical conduit of the fixed structure.

A barrier is disposed in the annular conduit between the receptacle of the fixed ring and the rotating shaft. The barrier comprises a lip seal connected to the rotating shaft and sliding on the receptacle of the fixed ring. Such a barrier is optional and hinders the flow of steam infiltrations towards the cylindrical conduit of the receptacle. The receptacle of the fixed ring is not fixed to a box with a chamber where the steam is collected, is condensed and is converted into a liquid. As a matter of fact, the steam is accumulated in the annular conduit between the receptacle of the fixed ring and the rotating shaft. The liquid that is condensed in the annular conduit between the receptacle of the fixed ring and the rotating shaft cannot be drained out. In fact, the liquid that is condensed in the annular conduit pushes the barrier and is directly conveyed in the cylindrical conduit of the receptacle towards the bearing.

Such a seal system is impaired by several drawbacks. The steam is accumulated in the annular conduit between the rotating shaft and the receptacle of the fixed ring, impairing the operation of the primary seal. The solidified liquid that flows in the cylindrical conduit of the receptacle is accumulated on the seal of the bearing, with the risk of impairing the bearing because the liquid must be stopped by the seal of the bearing, requiring the bearing manufacturer the use of a high-performance expensive bearing seal. Moreover, it is necessary to modify the motor housing by providing a long drain conduit.

WO2016/135670, in the name of the same applicant, discloses a mechanical seal comprising a rotating seal ring suitable for being integrally fixed to the rotating shaft and a fixed seal ring mounted in a receptacle suitable for being integrally fixed to a fixed structure. A sponge of absorbing material is fixed to the receptacle of the fixed ring in order to absorb leaks. The sponge is not in contact with the rotating shaft and, not being waterproof, it does not provide any seal. By definition, an absorbing material cannot operate as a seal. Such a type of seal does not provide for a box with a chamber for collecting the condensed liquid or for an aperture in communication with the exterior to drain the liquid that is condensed inside the box.

The purpose of the present invention is to eliminate the drawbacks of the prior art by disclosing a mechanical seal that is capable of protecting the electric and mechanical parts of a rotating machinery wherein the mechanical seal is installed.

Another purpose is to disclose a mechanical seal that is safe, reliable and easy to make and install.

Another purpose is to disclose such a mechanical seal that is capable of dispersing the eddy currents on a rotating shaft of the seal.

These purposes are achieved by a mechanical seal according to claim 1.

Advantageous embodiments of the invention appear from the dependent claims.

The mechanical seal of the invention is defined in claim 1.

Additional features of the invention will be manifest from the following detailed description, which refers to a merely illustrative, not limiting embodiment, shown in the appended figures, wherein:
Fig. 1 is an axial perspective view of a mechanical seal according to the invention applied to a hollow shaft of an electric motor;
Fig. 2 is an enlarged view of the mechanical seal of Fig. 1;
Fig. 3 is an axial view of the mechanical seal of Fig. 2;
Fig. 4 is an enlarged view of a portion of the mechanical seal of Fig. 3;
Fig. 5 is an exploded perspective view of the parts of the mechanical seal according to the invention;
Fig. 6 is an axial perspective view of a variant of the mechanical seal according to the invention;
Fig. 7 is an axial view of the mechanical seal of Fig. 6; and
Fig. 8 is an exploded perspective view of some parts of the mechanical seal of Fig. 6.

With reference to the appended Figures, a mechanical seal is disclosed, which is generally indicated with reference numeral 100.

The mechanical seal (100) comprises:
- a fixed part (1) suitable for being fixed to a casing (not shown in the figures) suitable for containing a fluid, and
- a rotating part (2) suitable for being fixed to a rotating shaft (3),

The fixed part (1) comprises a first seal ring (10). The rotating part (2) comprises a second seal ring (20). The two seal rings (10, 20) cooperate axially and provide a front sliding seal.

The seal rings (10, 20) are advantageously made of ceramic material, for example silicon carbide or carbon material.

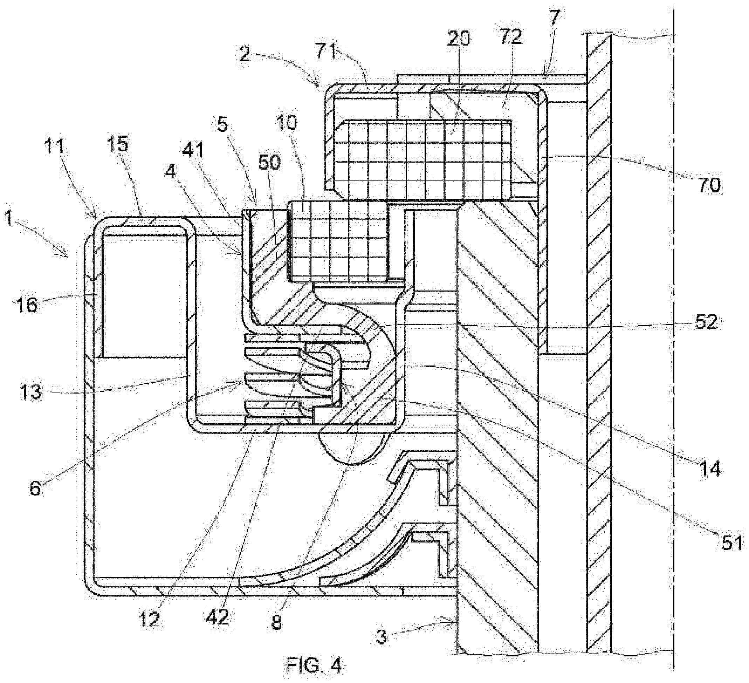

With reference to Fig. 4, the fixed part (1) comprises an annular receptacle (11) made of sheet metal by means of spinning technology. The annular receptacle (11) comprises:
- a planar annular base wall (12),
- an external cylindrical wall (13) that extends from an external edge of the base wall towards the seal rings,
- an internal tubular wall (14) in coaxial position to the external wall (13),
- a flange (15) that extends radially outwards from an end of the external wall (13) in opposite position to the base wall, and
- an ending lateral wall (16) that extends from the flange (15) coaxially to the external cylindrical wall.

The first seal ring (10) is mounted inside a dish (4) that is housed in the receptacle (11) with possibility of sliding in axial direction. A gasket (5) of bellows-like type, made of elastomeric material, is interposed between the first seal ring (10) and the dish (4).

The dish (4) comprises:
- a planar annular base wall (40) that faces the base wall (12) of the receptacle, and
- a cylindrical wall (41) that extends axially from an external edge of the base wall (40) in such a way to embrace said first seal ring (10), at least partially.

The gasket (5) comprises:
- a first annular portion (50) disposed between the base wall (40) and the lateral wall (41) of the dish (4) and the first seal ring (10),
- a second annular portion (51) disposed on the base wall (12) and on the internal tubular wall (14) of the receptacle, and
- a bellows-like portion (52) that connects the first annular portion (50) to the second annular portion (51) and comes out of the dish (4).

The first seal ring (10) is axially blocked inside the dish (4) by means of radial interference, namely by radially compressing the first annular portion (50) of the gasket (5).

The mechanical seal (100) also comprises a spring (6) housed in the receptacle (11) and axially compressed between the base wall (12) of the receptacle and the base wall (40) of the dish, in such a way to axially push the first seal ring (10) against the second seal ring (20).

With reference to the example, the spring (6) is a helical wave spring made with a flat ribbon, such as the springs marketed with the trade name Crest-to-Crest® by Smalley. However, the spring (6) may be replaced by an annular wave spring, or by a traditional helical cylindrical spring.

A spring (55) is disposed in the receptacle (11) between the second annular portion (51) of the gasket and the spring (6), in such a way to hold the gasket (5).

The rotating part (2) of the mechanical seal (100) comprises a sleeve (7).

The sleeve (7) comprises:
- a tubular portion (70) passing through the receptacle (11) and suitable for being fixed on the rotating shaft (3), and
- an annular housing portion (71) that houses the second seal ring (20).

The second seal ring (20) is locked in the housing portion (71) of the sleeve by means of a cap (72) with annular shape made of elastomeric material.

The rotating shaft is revolvingly mounted on bearings (not shown) that are disposed under the mechanical seal (100) at a suitable distance.

The mechanical seal (100) is suitable for being used in an electric motor, for electric vehicles provided with a coolant system. In view of the above, the mechanical seal (100) isolates the coolant, preventing it from reaching the bearings of the rotating shaft and the electric parts of the motor.

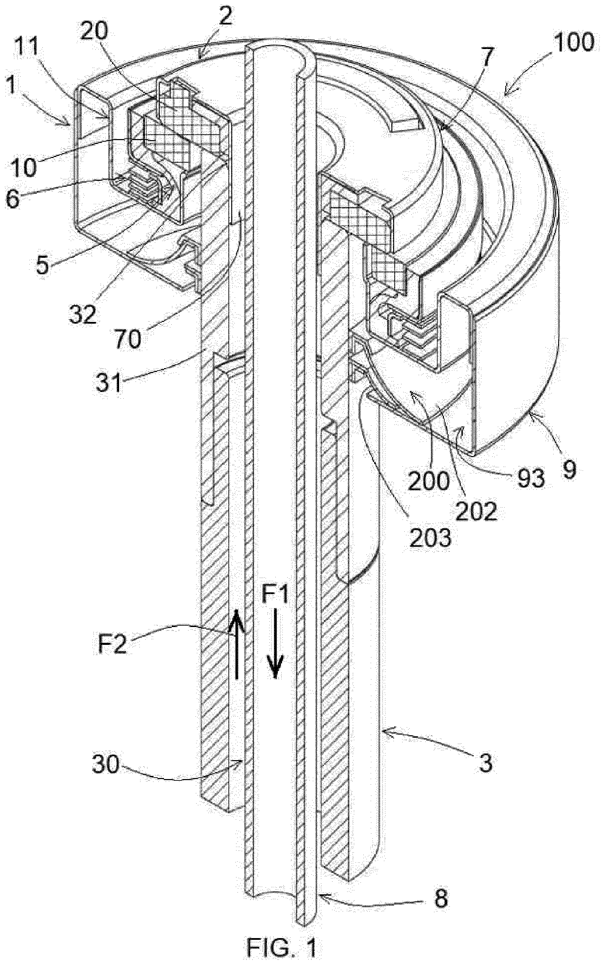

With reference to Fig. 1, advantageously, the rotating shaft (3) is a hollow shaft provided with an axial cavity wherein a conduit (8) is axially disposed for introducing the coolant in the direction of the arrow F1.

An annular empty space (30) is generated between the conduit (8) and the rotating shaft (3) in communication with the interior of the conduit (8). In view of the above, the coolant flows in the annular empty space (30) and is ejected from above the sleeve (7) of the rotating part.

The rotating shaft (3) comprises a cylindrical sleeve (31) disposed at one end of the rotating shaft (3) where the mechanical seal (100) is to be mounted. The tubular portion (70) of the sleeve (7) is fixed to an internal surface of the cylindrical sleeve (31), in such a way that the second seal ring (20) is stopped against an end edge (32) of the cylindrical sleeve.

It must be noted that, with reference to the Figures, the fixed part (1) is disposed under the rotating part (2). Otherwise said, the internal tubular wall (14) of the receptacle of the fixed part is radially spaced from the cylindrical sleeve (31).

The two seal rings (10, 20) and the gasket (5) generate a primary gasket to prevent the coolant from passing through the receptacle (11), reaching the external surface of the sleeve (31) of the rotating shaft (3) and therefore reaching the mechanical parts, such as the bearings that revolvingly support the rotating shaft, and the electric parts, such as the windings of the electric motor that rotates the rotating shaft (3).

According to the invention, the fixed part (1) of the mechanical seal also comprises a box (9) fixed to the receptacle (11). The box (9) comprises a planar base wall (90) and a cylindrical lateral wall (91) that extends from the base wall. The box (9) has a central hole (92) for the insertion of the rotating shaft (3).

The cylindrical lateral wall (91) of the box is fixed to the ending lateral wall (16) of the receptacle. In view of the above, a chamber (93) is formed between the box (9) and the receptacle (11) to receive any fluid leaks that pass through the primary mechanical seal composed of the two seal rings (10, 20) and the gasket (5).

The box (9) has a thickness lower than 5 mm. The box (9) can be of metal material, such as sheet metal, and can be obtained by means of spinning technology.

A secondary seal (200) is disposed between the box (9) and the shaft (3) to prevent the fluid contained in the chamber (93) of the box from leaking through the central hole (92) of the box. The secondary seal (200) sends the steam that slides on the external surface of the rotating shaft (3) towards the base wall (90) of the box, in such a way that the steam is accumulated in the chamber (93), is condensed and is converted into liquid. A drain hole (94) (Fig. 1) is obtained in the box (9) in communication with the chamber (93) of the box and with the exterior for draining the liquid accumulated in the chamber (93) of the box. The drain hole (94) is preferably obtained in peripheral position in the lateral wall (91) of the box.

Considering that the box (9) is fixed to the annular receptacle (11), the fixed part (1) of the seal comprises the box (9) and the annular receptacle (6) and is fixed in a conduit of the motor housing wherein the rotating shaft (3) is disposed.

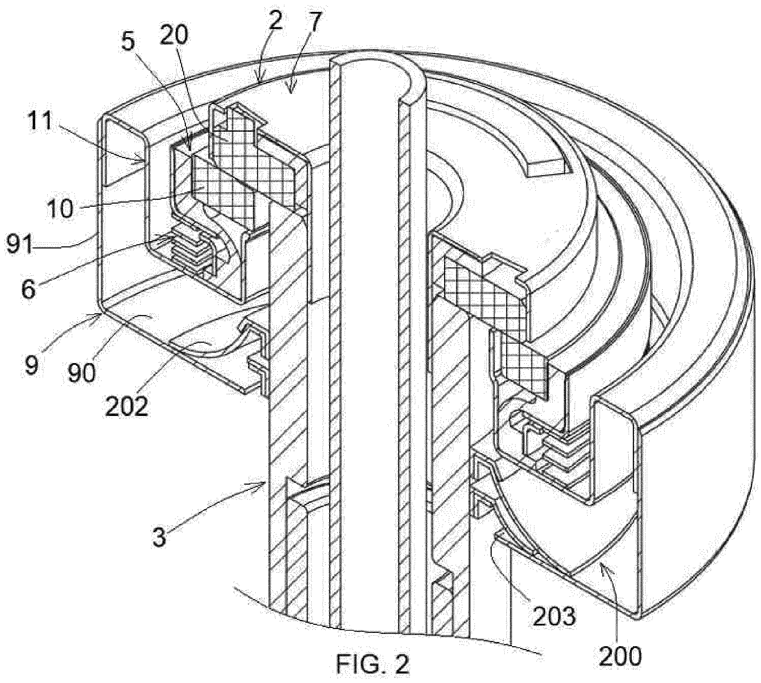

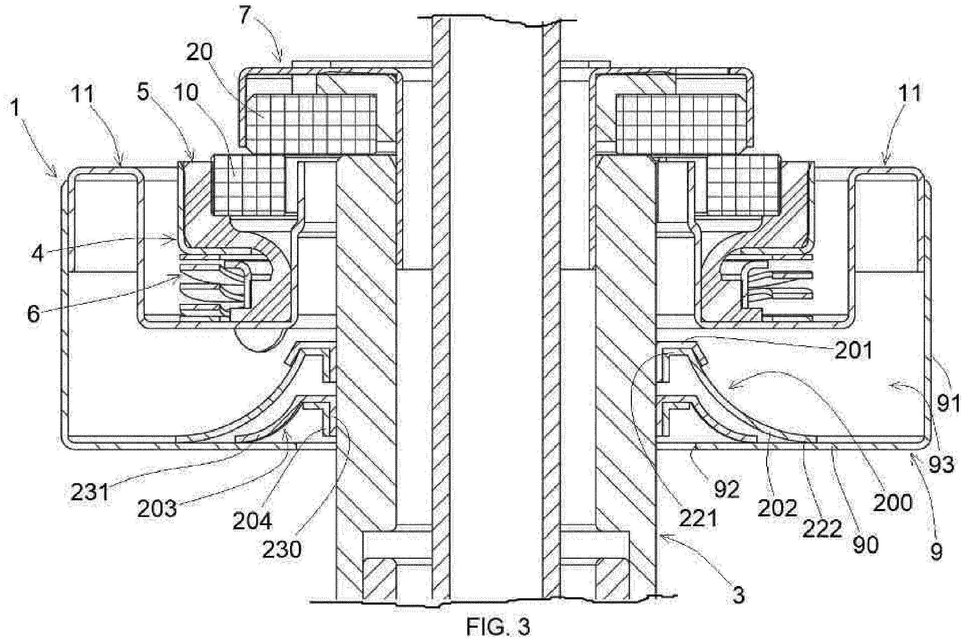

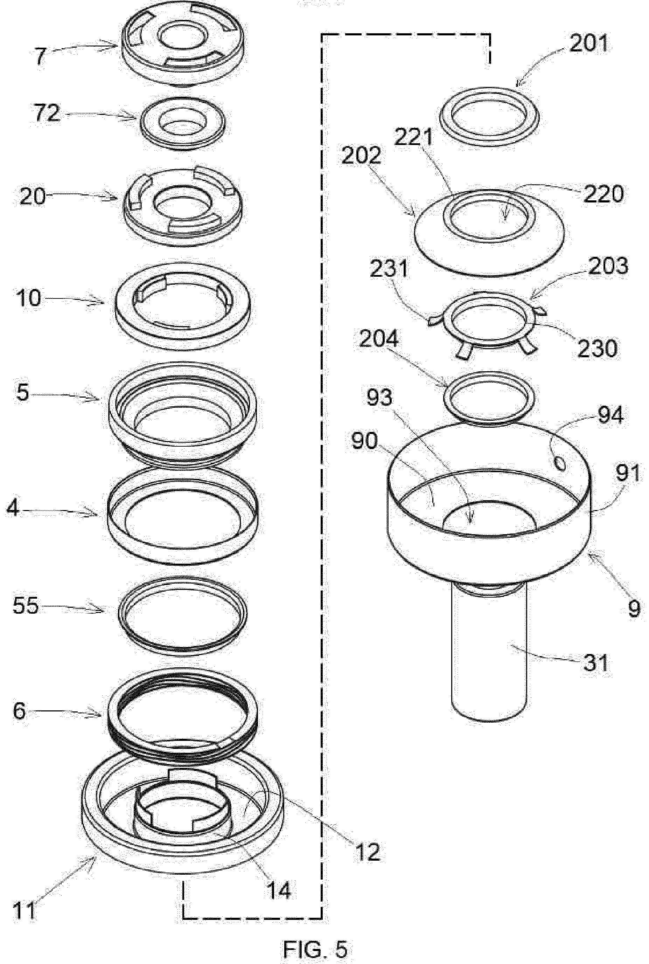

In the embodiment of Figs. 1 - 5, the secondary seal (200) is fixed to the rotating shaft (3) and is disposed in the chamber (93) of the box. In view of the above, the fluid (liquid and/or steam) is accumulated in the chamber (93) of the box and is ejected from the chamber (93) of the box through the drain hole (94) (Fig. 1).

The secondary seal (200) comprises a secondary gasket (202) connected to the rotating shaft (3) and radially extending outwards from the rotating shaft in such a way to slide under pressure against a wall of the box.

It must be noted that during a high rotation of the rotating shaft (3), the secondary gasket (202) is subject to a high centrifugal force that tends to detach the secondary gasket from the wall of the box (9). Such a fact is not a problem in terms of tightness because an air cushion is generated between the secondary gasket (202) and the wall of the box (9), acting as barrier to prevent the passage of the fluids contained in the box.

The secondary gasket (202) can be directly fixed to the rotating shaft or can be fixed to a collar (201) that is integrally fixed to the rotating shaft.

The collar (201) is substantially shaped liked an overturned-U, in such a way to define an annular seat.

The secondary gasket (202) has a truncated shape with an axial hole (220) in order to be disposed around the rotating shaft (3). The secondary gasket (202) has an annular rib (221) disposed in an upper edge of the gasket that is engaged in the seat of the collar (201).

The secondary gasket (202) has a lower edge (222) suitable for being slidingly in contact with the base wall (90) of the box. In view of the above, when the secondary gasket (202) is axially compressed towards the base wall (90) of the box, the secondary gasket (202) acquires the shape of a hyperbola, when seen in a sectional view.

The secondary gasket (202) is made of a waterproof material, preferably with a low dynamic friction coefficient with respect to the base wall (90) of the box. The expression "low dynamic friction coefficient" indicates a dynamic friction coefficient lower than 0.1.

Considering that the base wall (90) of the box is preferably made of metal material, such as sheet metal, the secondary gasket (202) can be advantageously made of a polymeric material comprising polytetrafluoroethylene (PTFE). In such a case, if the base wall (90) is made of steel plate and the secondary gasket (202) is made of PTFE, a very low dynamic friction coefficient of approximately 0.04 is obtained. In view of the above, the secondary gasket (202) is not consumed or damaged.

Advantageously, the secondary gasket (202) can be made of an electrically conductive material, such as a material comprising carbon or graphite. Advantageously, the secondary gasket (202) can be made of PTFE and carbon.

In this way, the eddy currents generated on the rotating shaft (3) during the rotation are dispersed through the secondary gasket (202) on the box (9). Given that the box (9) is part of the fixed part (1) of the mechanical seal, the box (9) can be grounded to discharge the eddy currents.

If the secondary gasket (202) is not made of an electrically conductive material, the mechanical seal (100) can comprise an electric conductor (203) connected to the rotating shaft (3) and disposed in the chamber (93) of the box in such a way to slide on a wall of the box (9). In view of the above, the rotating shaft (3) is electrically connected to the box (9) in such a way to disperse the induced current from the rotating shaft (3) towards the box (9).

Advantageously, the electric conductor (203) is disposed under the secondary gasket (200) in order not to be in contact with the fluid that is accumulated in the chamber (93) of the box.

The electric conductor (203) comprises a collar (230) that is fixed to the rotating shaft (3), for example by means of a retention ring (204) that presses the collar (230) of the electric conductor against the rotating shaft (3).

A plurality of conductive strips (231) radially protrudes outwards from the collar (230) of the electric conductor, sliding on the base wall (90) of the box. The conductive strips (231) can be, for instance, brushes of conductive wires, such as copper.

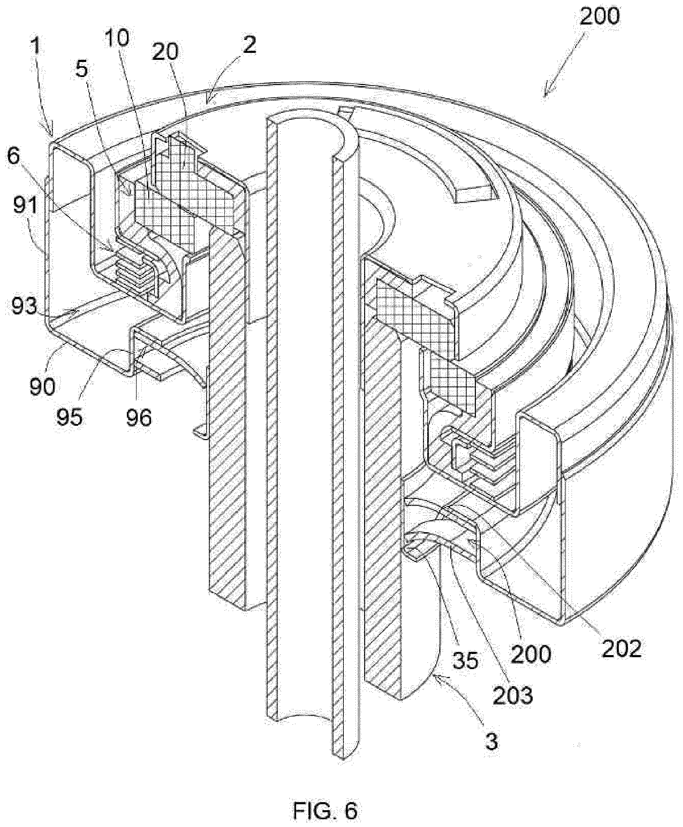

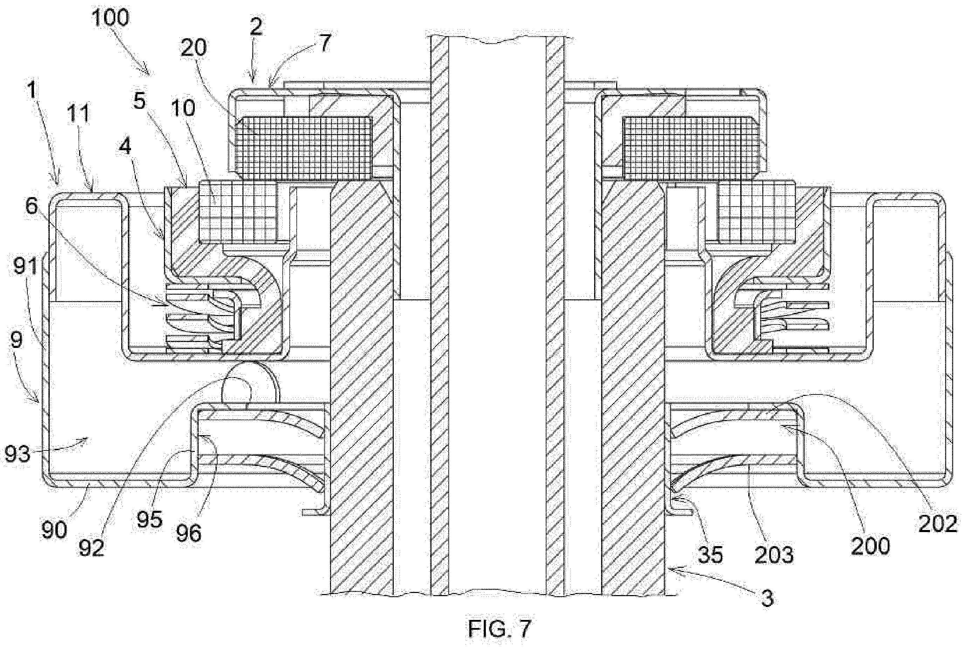

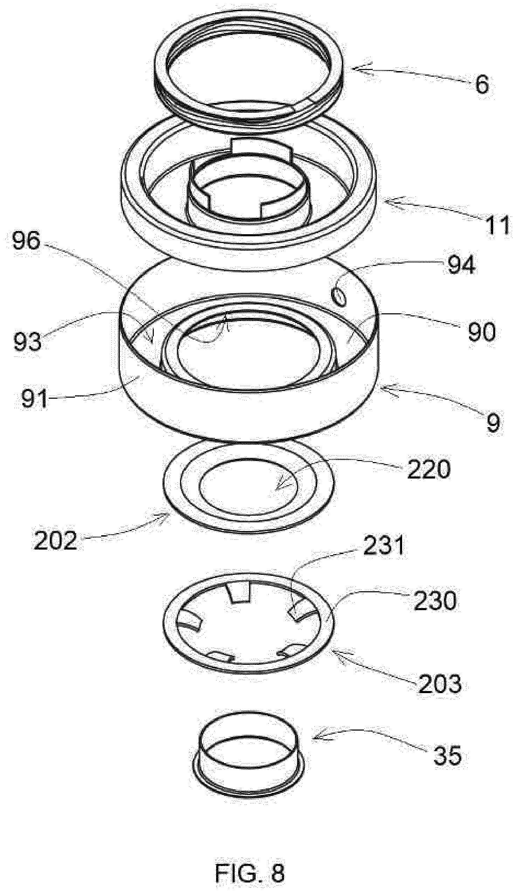

With reference to Figs. 6, 7 and 8, a variant of the mechanical seal (100) is disclosed, wherein the parts that are identical to or correspond with the parts described above are indicated with the same reference numbers, omitting a detailed description.

In such a case, an internal lateral wall (95) extends orthogonally from the base wall (90) of the box in such a way to define an external annular housing (96) around and under the central hole (92) of the box.

The secondary gasket (202) and the conductor (203) are disposed in the external housing (96) under the central hole (92) of the box.

The secondary gasket (202) and the conductor (203) are fixed to the internal lateral wall (95) of the box and slide on the shaft (3). In such a case, the shaft (3) can comprise a sleeve (35) that is integrally fixed to the shaft, in such a way that the secondary gasket (202) and the conductor (203) slide on the sleeve (35).

## Claims

1. Mechanical seal (100) comprising:
- a fixed part (1) comprising a receptacle (11) suitable for being fixed to a fixed structure,
- a rotating part (2) comprising a sleeve (7) suitable for being fixed to a rotating shaft (3),
- a first seal ring (10) disposed in a dish (4) mounted in such a way to axially slide inside the receptacle (11),
- a second seal ring (20) mounted in the sleeve (7),
- a gasket (5) housed in the dish (4), and in the receptacle (11), in such a way to axially block said first seal ring (10), and
- a spring (8) that is axially compressed between the receptacle (8) and the dish (4), in such a way to push said first seal ring (10) towards said second seal ring (20),
**characterized in that**
said fixed part (1) of the mechanical seal also comprises a box (9) having a base wall (90) with a central hole (92) for the insertion of the rotating shaft (3); said box (9) being fixed to said receptacle (11) in such a way to form a chamber (93) between said box (9) and said receptacle (11) in order to collect fluid leaks that pass through the seal rings (10, 20) and the gasket (5), and
said mechanical seal (100) also comprises a secondary seal (200) disposed between the box (9) and the rotating shaft (3) to prevent the fluid leaks from passing through the central hole (92) of the box and from being ejected from the box (9), wherein said secondary seal (200) sends the steam that slides on the external surface of the rotating shaft (3) toward the base wall (90) of the box, in such a way that the steam is accumulated in the chamber (93) of the box, is condensed and is converted into liquid;
said box (9) comprising a drain hole (94) in communication with the chamber (93) of the box and with the exterior for draining the liquid accumulated in the chamber (93) of the box.

2. The mechanical seal (100) of claim 1, wherein said box (9) has a thickness lower than 5 mm

3. The mechanical seal (100) of claim 2, wherein said box (9) is made of sheet metal.

4. The mechanical seal (100) of anyone of the preceding claims, wherein the secondary seal (200) comprises a secondary gasket (202) fixed to the rotating shaft (3) or to the box (9); when the secondary gasket (202) is fixed to the rotating shaft, the secondary gasket radially extends outwards from the rotating shaft in such a way to slide under pressure against a wall of the box (9); when the secondary gasket (202) is fixed to the box, the secondary gasket radially extends from the box towards the rotating shaft in such a way to slide under pressure against a wall of the rotating shaft.

5. The mechanical seal (100) of any one of the preceding claims, wherein said secondary gasket (202) has a truncated-conical shape with a central hole (220) disposed around the rotating shaft (3).

6. The mechanical seal (100) of any one of claims 4 or 5, wherein said box (9) and said secondary gasket (202) are made of materials with a dynamic friction coefficient lower than 0.1.

7. The mechanical seal (100) of claim 6, wherein said secondary gasket (202) is made of a polymer material comprising polytetrafluoroethylene (PTFE).

8. The mechanical seal (100) of any one of claims 4 to 7, wherein said secondary gasket (202) is made of an electrically conductive material in such a way to disperse the eddy currents on the rotating shaft (3) during the rotation.

9. The mechanical seal (100) of claim 8, wherein said secondary gasket (202) is made of polytetrafluoroethylene (PTFE) and carbon.

10. The mechanical seal (100) of any one of claims 1 to 7, also comprising an electric conductor (203) disposed between the rotating shaft (3) and the box (9) in such a way to put the rotating shaft (3) in electric communication with the box (9) to disperse the eddy currents on the rotating shaft (3) during the rotation.

11. The mechanical seal (100) of claim 10, wherein said electric conductor (203) is disposed under said secondary seal (200).

12. The mechanical seal (100) of any one of claims 2 to 11, wherein said box (9) comprises a planar base wall (90) and a cylindrical lateral wall (91) that extends from the base wall, and said secondary gasket (202) is fixed to the rotating shaft (3) and is disposed in the box in order to slide against said base wall (90) of the box.

13. The mechanical seal (100) of any one of claims 10 to 13, wherein said electric conductor (203) is fixed to the rotating shaft (3) and is disposed in the chamber (93) of the box in such a way to slide against a wall of the box.

14. Electric motor for electric vehicle provided with a coolant system comprising a rotating shaft (3) that is internally hollow and a conduit (8) that is disposed axially inside the rotating shaft for the passage of a coolant inside the conduit (8) and inside an empty space (30) between the conduit (8) and the rotating shaft (3), **characterized in that** it comprises a mechanical seal (100) according to any one of the preceding claims.
